# EUROPÄISCHE PATENTSCHRIFT

(11) **EP 3 004 774 B1**
(45) Veröffentlichungstag und Bekanntmachung des Hinweises auf die Patenterteilung: **19.07.2017**
(21) Anmeldenummer: 14748197.2
(22) Anmeldetag: 04.08.2014
(51) Int. Cl.: F28D 20/00

(54) **DRUCKLOSER WÄRMESPEICHER FÜR WASSERTEMPERATUREN ÜBER 100°C**
PRESSURELESS HEAT STORAGE DEVICE FOR WATER TEMPERATURES OVER 100 °C
DISPOSITIF DE STOCKAGE DE CHALEUR SANS PRESSION POUR DES TEMPÉRATURES D'EAU AU-DELÀ DE 100°C

(30) Priorität: 19.08.2013 EP 13180872
(43) Veröffentlichungstag der Anmeldung: 13.04.2016
(73) Patentinhaber: Siemens Aktiengesellschaft, 80333 München (DE)
(72) Erfinder: SCHÖTTLER, Michael, 91052 Erlangen (DE); GROBSTICH, Andre, 08237 Steinberg (DE)
(86) Internationale Anmeldenummer: PCT/EP2014/066728
(87) Internationale Veröffentlichungsnummer: WO 2015/024765

(56) Entgegenhaltungen:
- EP-A1- 1 411 312
- EP-A1- 2 354 474
- EP-A1- 2 698 584
- EP-A2- 2 455 696
- WO-A2-2009/049612
- DE-A1- 19 548 816
- DE-A1-102012 024 073
- DE-C1- 10 040 892
- DE-U1-202006 002 535
- FR-A1- 2 405 443
- NL-C2- 1 033 139

## Beschreibung

Die Erfindung betrifft einen Wärmespeicher, insbesondere einen Wärmespeicher zum Speichern und Bereitstellen von bei der Stromerzeugung anfallender Wärmeenergie mittels eines Fluides, und bezieht sich auf die drucklose Speicherung für Temperaturen über 100°C. Die Erfindung betrifft ferner eine Anlage zur Kraft-Wärme-Kopplung sowie ein Verfahren zum Speichern und Bereitstellen von bei der Stromerzeugung anfallender Wärmeenergie mittels eines Fluides.

Durch die stark fluktuierende Einspeisung von regenerativer Energie (Sonne/Wind) in die Stromnetze ergibt sich für die KWK-Kraftwerke (KWK = Kraft-Wärme-Kopplung) das Dilemma, dass sie einerseits entsprechend der Fernwärmeanforderungen thermische Energie und anderseits entsprechend der Netzanforderungen elektrische Energie liefern sollen, wobei es dann z.B. nachts oder am Wochenende unwirtschaftlich werden kann, fossile Brennstoffe zu verfeuern, um Fernwärme zu erzeugen, da der Strompreis dann oft sehr niedrig ist (in Zukunft evtl. sogar immer häufiger negativ). Um die Produktion von thermischer und elektrischer Energie zu entkoppeln, werden daher vermehrt Fernwärmespeicher eingesetzt, vorzugsweise als drucklose Heißwasserschichtenspeicher. Da drucklose Schichtenspeicher nur mit Wassertemperaturen <100°C (betrieblich wird meist auf <95°C begrenzt) beladen werden können und da zwischen Speicher und Fernwärmenetz oft noch Wärmetauscher mit zusätzlicher Grädigkeit zwischengeschaltet sind (da das Fernwärmenetz oft einen wesentlich höheren Betriebsdruck hat als der Pufferspeicher) sinkt die tatsächlich nutzbare Temperatur im Entlade-Modus zum Teil auf unter 85°C. In der Übergangszeit (Frühjahr/Herbst) und vor allem im Winter werden aber die üblichen Fernwärmenetze mit Vorlauftemperaturen deutlich über 95°C (bis zu ca. 135/140°C) betrieben: außer im Sommer bei Fernwärmevorlauftemperaturen kleiner 85-95°C ist es daher mit dem derzeit üblichen Konzept nicht möglich, das Fernwärmenetz nur aus dem Wärmespeicher alleine zu bedienen und das KWK-Kraftwerk bzw. den gefeuerten oder elektrischen Zusatzkessel komplett abzuschalten.
Um Heißwasserschichtenspeicher mit höheren Fernwärmevorlauftemperaturen über 95°C beladen zu können, werden zum Teil Druckbehälter eingesetzt, die aufgrund der druckabhängigen Sättigungstemperaturen mit entsprechend höheren Vorlauftemperaturen beladen und entladen werden können. Der große Nachteil der Druckbehälter ist jedoch ein wesentlich höherer Prüfaufwand bei der Herstellung, sowie wiederkehrende Prüfungen (z.B. Druckprobe mit kaltem Wasser nach 10 Jahren, wiederkehrende Sichtprüfung aller Schweißnähe: dazu müsste die gesamte Isolierung der Tanks entfernt werden). Zusätzlich steigen die Versicherungsprämien für Druckbehälter abhängig vom Druck und vom Volumen extrem an (da das Risiko von den Versicherern als sehr hoch eingeschätzt wird) und damit werden Druckbehälter für große Speichervolumina aus Kostengründen derzeit sehr selten eingesetzt. Die Dokumente DE 100 40 892 C1, WO 2009/049612 A2 und EP 2 455 696 A2 offenbaren z.b. Druckwärmespeicher zum Speichern von Wärmeenergie.

Aufgabe der Erfindung ist es, einen Wärmespeicher der eingangs genannten Art bereitzustellen, der eine einfache und kostengünstige Speicherung von Wasser über 100°C ermöglicht. Eine weitere Aufgabe der Erfindung ist die Angabe einer entsprechenden Anlage zur Kraft-Wärme-Kopplung. Ferner ist es eine Aufgabe der Erfindung, ein Verfahren zum Speichern und Bereitstellen von bei der Stromerzeugung anfallender Wärmeenergie mittels eines Fluides anzugeben.
Die Erfindung löst die auf einen Wärmespeicher gerichtete Aufgabe, indem sie bei einem derartigen Wärmespeicher zum Speichern und Bereitstellen von bei der Stromerzeugung anfallender Wärmeenergie mittels eines Fluids mindestens eine erste und eine zweite Kammer vorsieht, wobei die erste über der zweiten Kammer angeordnet ist und eine im Wesentlichen in den Kammern angeordnete Leitung einen oberen Bereich der ersten Kammer mit einem unteren Bereich der zweiten Kammer verbindet, so dass es zwischen Endpunkten der Leitung im Betrieb keine Temperaturdifferenzen und damit auch keine Auftriebskräfte gibt, wobei eine dritte, unterste Kammer vorgesehen ist, wobei zwischen der zweiten Kammer und der untersten Kammer eine Leitung angeordnet ist, welche einen oberen Bereich der zweiten Kammer mit einem unteren Bereich der untersten Kammer verbindet, wobei die Leitungen thermisch isoliert sind und wobei je zwei benachbarte Kammern durch einen isolierten Zwischenboden voneinander getrennt sind.

Die Erfindung nutzt die Tatsache, dass atmosphärisch offene Tanks (egal welche Höhe) nicht als Druckbehälter, sondern als Gebäude bzw. Betriebsmittel gelten, unabhängig vom statischen Druck und von der Betriebstemperatur, da Druck als auf den atmosphärischen Druck bezogenen Überdruck definiert wird. Durch die Ausführung des Wärmespeichers als offenes Bauteil kann sich kein zusätzlicher Überdruck ausbilden.
Die Erfindung sieht daher die Anordnung mehrerer Schichtenspeicher übereinander in sog. Kammern vor, wodurch verhindert wird, dass über 100°C heißes Wasser in die oberen Bereiche des Tanks gelangen kann. Damit der Tank weiterhin als druckloser atmosphärisch offener Tank gilt, müssen alle Kammern durch innen-liegende Verbindungsleitungen verbunden werden (bei außen-liegenden Verbindungsleitungen würden die Kammern als einzelne Druckbehälter angesehen, die über Rohrleitungen mit Druck beaufschlagt werden können). Um zu verhindern, dass es über diese Verbindungsleitungen zu thermischen Ausgleichsströmungen kommt (da die Dichte des heißen Wassers geringer ist als von kaltem Wasser), werden immer der obere Bereich einer jeden Kammer mit dem unteren Bereich der darunterliegenden Kammer verbunden: zwischen den Endpunkten der Verbindungsleitungen gibt es im Betrieb keine Temperaturdifferenzen und damit auch keine Auftriebskräfte (und damit keine thermische Zirkulation, welche die Schichtung zerstören könnte). Durch die Höhe des Wärmespeichers kann auch der Druck im unteren Teil des Wärmespeichers festgelegt werden. Die Anzahl und die Höhe der einzelnen Kammern wird vorzugsweise so gewählt, dass einerseits eine Beladung mit maximaler Vorlauftemperatur möglich ist (z.B. sollte die Einbauhöhe des untersten Zwischenbodens, also des Bodens zwischen der untersten und der darüber liegenden Kammer, so gewählt werden, dass im oberen Teil der untersten Kammer immer "statischer Druck" > "Sättigungsdruck der maximalen Vorlauf-Temperatur" gegeben ist) und anderseits eine maximale Beladung bei minimalen Kosten erreicht wird (d.h. relativ viele Zwischenböden oberhalb der untersten "großen" Kammer, damit die maximale Beladetemperatur im oberen Teil einer jeden weiteren Kammer aufgrund des relativ hohen statischen Druckes möglichst hoch ist).

Bei hohen Wärmespeichern kann der statische Druck im unteren Teil des Wärmespeichers sehr hohe Werte erreichen, die eine "drucklose" Speicherung von Fernwärme-Heißwasser bis über 135°C zulassen.

Durch die Höhe des Wärmespeichers bzw. der Kammern wird der Betriebsdruck im heißen Teil festgelegt (welcher meist mit dem heißen Fernwärmevorlauf verbunden ist). Dieser Betriebsdruck im heißen Teil des Wärmespeichers wird so gewählt, dass er oberhalb des Sättigungsdruckes entsprechend der maximal möglichen Fernwärmevorlauftemperatur (z.B. im Winter) zu liegen kommt.

In einer vorteilhaften Ausführungsform ist ein unterer Bereich der ersten Kammer über eine absperrbare Leitung, in der eine Pumpe angeordnet ist, mit einem unteren Bereich mindestens einer darunterliegenden Kammer verbunden. Hierdurch wird die Möglichkeit einer Belade-Begrenzung geschaffen. Wenn die unterste Kammer komplett gefüllt ist, würde das z.B. 135°C warme Wasser bei weiterer Beladung über die Ausgleichsleitung in den oberen Teil der zweit-untersten Kammer strömen und aufgrund des geringeren statischen Druckes dort Dampfblasen bilden, was aber verhindert werden soll. Daher wird bei Erreichen der zulässigen maximalen Temperatur im unteren Teil einer jeden Kammer aus dem untersten Teil der obersten Kammer relativ kaltes Rücklaufwasser gepumpt/zugemischt, und damit die jeweilige maximal zulässige Kammertemperatur (entsprechend statischem Kammerdruck) geregelt. Sobald auch die oberste Kammer (im unteren Bereich, wo der Rücklauf einbindet) die maximal zulässige Temperatur erreicht hat, ist eine weitere Beladung nicht mehr möglich.

Damit die Wärmeübertragung vom heißen auf das kalte Medium möglichst gering ist, ist es vorteilhaft, wenn die Leitung, d.h. die Ausgleichsleitung zwischen zwei Kammern, thermisch isoliert ist.

Aus demselben Grund ist es vorteilhaft, wenn je zwei benachbarte Kammern durch einen isolierten Zwischenboden voneinander getrennt sind.

Um eine Beschädigung der Tankzwischenböden beim Füllen eines leeren Tanks zu vermeiden, ist es vorteilhaft, wenn zwischen je zwei benachbarten Kammern mindestens ein Druckausgleichsventil angeordnet ist, das bei entsprechender Druckdifferenz öffnet. Damit kann beim Befüllen des Tanks von unten über die unterste Kammer die Luft in die jeweils obere Kammer entweichen. Beim Befüllen des Tanks von oben über die oberste Kammer wird das Wasser durch diese Druckausgleichsventile in die jeweils untere Kammer strömen. Geringe Druckdifferenzen an den Zwischenböden sind im Betrieb aufgrund der unterschiedlichen Dichte des Wassers in den einzelnen Kammern und in den parallel geschalteten Ausgleichsleitungen unvermeidlich.

Vorzugsweise ist an einem Hochpunkt einer Kammer, die unter einer obersten Kammer angeordnet ist, ein Entlüftungsventil vorgesehen, welches über eine Leitung mit der obersten Kammer verbunden ist. Dieses Entlüftungsventil kann entweder ein automatisches Entlüftungsventil sein und kann z.B. mechanisch arbeiten (z.B. als Schwimmerventil) oder es kann z.B. ein Motorventil sein, welches über Füllstandsmessungen in der entsprechenden Kammer angesteuert wird. Diese Entlüftungsventile entfernen eventuell anfallende Luft (z.B. auch bei der Erstbefüllung) und auch anfallenden Dampf (z.B. bei Beladung einer Kammer mit zu hoher Temperatur).

Wie bei den bisher üblichen drucklosen Pufferspeichern bereits üblich und gebräuchlich, kann auch der Wärmespeicher nach der Erfindung als oben geschlossener Tank ausgeführt werden. Es ist daher zweckmäßig, wenn die oberste Kammer als oben geschlossener Tank ausgeführt ist und eine Dampf- oder Inertgas-Zufuhr vorgesehen ist. Diese Kammer kann dann mit Inertgas (z.B. Stickstoff N₂) oder Polsterdampf bei einem Betriebsdruck <0,5 bar beaufschlagt werden, um eine unerwünschte Anreicherung des Wasserinhalts mit Luftsauerstoff (O₂) oder Kohlendioxid (CO₂) zu verhindern und um den Betriebsdruck und damit die maximale Beladetemperatur weiter zu steigern. Gemäß Druckgeräterichtlinie 97/23/EG gelten geschlossene Behälter, welche nur mit einem Überdruck von bis max. 0,5 bar betrieben werden können (d.h. Druckabsicherung z.B. mittels Sicherheitsventil ist erforderlich), nicht als Druckbehälter und unterliegen damit nicht der Druckgeräterichtlinie.

Zur optimalen Be- und Entladung des Wärmespeichers und entsprechend der Wärmeverteilung im Wärmespeicher ist es zweckmäßig, wenn die erste Kammer einen in einem unteren Bereich angeordneten Anschluss an einen Fernwärmerücklauf und eine unterste Kammer einen in einem oberen Bereich angeordneten Anschluss an einen Fernwärmevorlauf aufweist.

Es ist vorteilhaft, wenn über der ersten Kammer eine Zusatzkammer angeordnet ist, welche über eine Leitung mit der untersten Kammer verbunden ist, wobei die Leitung in einen unteren Bereich der untersten Kammer mündet. Das heißt, wenn der mit dem Fernwärmerücklauf verbundene Teil des Speichers mit einem Deckel versehen wird und oberhalb dieses Deckels eine geringe Kaltwasservorlage gehalten wird, entsteht eine weitere Kammer, welche über eine Kaltwassersäule mit dem untersten Teil der untersten Kammer verbunden wird. Dadurch kann - unter Ausnutzung der verschiedenen spezifischen Gewichte der Kaltwassersäule und des Warmwassers in den einzelnen Kammern - der Druck in der mit dem Fernwärmerücklauf verbundenen Kammer geringfügig über den Umgebungsdruck angehoben werden (je nach Temperaturunterschied ergibt sich ein variabler Überdruck gegenüber Umgebung) und diese Kammer lässt sich mit Fernwärme-Wasser über 100°C beladen, was die Gesamtladekapazität des Wärmespeichers weiter erhöht.

Weiterhin ist es vorteilhaft, wenn das Fluid im Wärmespeicher für die Verwendung in einem Fernheiznetz geeignet ist. Dabei ist es besonders zweckmäßig, wenn das Fluid konditioniertes Deionat ist.

Damit ist erstens kein zusätzlicher Wärmetauscher erforderlich, um die Wärme zwischen Wärmespeicher und Fernwärmenetz zu übertragen. Es werden also Komponenten eingespart. Zweitens entfällt der Exergie-Verlust durch die Grädigkeit am Wärmetauscher beim Laden und Entladen des Wärmespeichers. Drittens vergrößert sich die nutzbare Wärmekapazität des Wärmespeichers (der Wärmespeicher kann bis zu einer Fernwärmevorlauftemperatur beladen werden) und viertens kann das Fernwärmenetz immer aus dem Wärmespeicher mit der vorher eingespeicherten Vorlauftemperatur versorgt werden - ohne Nachheizung (mit Wärmetauscher ergibt sich sowohl beim Beladen als auch beim Entladen eine Grädigkeit und die Entladetemperatur ist damit immer um die doppelte Grädigkeit niedriger als die gewünschte Vorlauftemperatur).

Die auf eine Anlage zur Kraft-Wärme-Kopplung gerichtete Aufgabe der Erfindung wird gelöst durch eine Anlage zur Kraft-Wärme-Kopplung, umfassend einen Stromerzeuger und einen Wärmespeicher wie oben beschrieben.

Dabei ist es vorteilhaft, wenn durch eine Verbindungsleitung zwischen Wärmespeicher und Fernwärmenetz der Betriebsdruck gehalten wird. Die Höhe des Wärmespeichers bestimmt durch den geodätischen Wasserdruck den Betriebsdruck im Fernwärmenetz. Ein separates Fernwärmenetz-Nachspeise-und-Druckhalte-System kann damit entfallen.

Im erfinderischen Verfahren zum Speichern und Bereitstellen von bei der Stromerzeugung anfallender Wärmeenergie mittels eines Fluids, wobei ein Betriebsdruck in einem heißesten Teil eines Speichers oberhalb eines Sättigungsdrucks des Fluids entsprechend einer maximal möglichen Fernwärme-Vorlauftemperatur zu liegen kommt, wird das Fluid in übereinanderliegenden, miteinander verbundenen Kammern gespeichert, wobei der heißeste Teil in der untersten Kammer gespeichert wird, wobei der Druck für den heißesten Teil in der untersten Kammer durch darüber liegendes kälteres Fluid erzeugt wird.

Beim Wärmespeicher nach der Erfindung kann überschüssige Fernwärme mit den üblichen Vorlauftemperaturen von bis zu ca. 135°C (und höher, je nach Wärmespeicherhöhe und Ausführung) eingespeichert und bei Bedarf wieder entnommen und ohne weitere Nachheizung in das Fernwärmenetz zurückgespeist werden. Damit kann in Zeiten niedriger Netzentgelte das KWK-Kraftwerk komplett abgeschaltet und das Fernwärmenetz aus dem Wärmespeicher mit der erforderlichen Vorlauftemperatur bedient werden.

Der Tank des Wärmespeichers kann als druckloser, atmosphärisch offener Tank ausgeführt werden und unterliegt damit nicht der Druckgeräte-Richtlinie. Es sind keine wiederkehrenden Druck- und Sichtprüfungen erforderlich. Die Versicherungsprämien sind gegenüber einem Druckbehälter deutlich niedriger.

Die erforderlichen Speichertank-Volumina können drastisch reduziert werden, da der Wärmespeicher nicht wie bei drucklosen Tanks bisher üblich zwischen ca. 60°C Rücklauftemperatur und maximal 95°C (d.h. mit einem Temperaturunterschied von etwa 35K) beladen und entladen werden können, sondern mit einem Temperaturunterschied von bis zu 75K (z. B. von 60°C bis 135°C). Der Wärmespeicher nach der Erfindung wird natürlich nur in der untersten Kammer mit der maximalen Fernwärmetemperatur beladen werden, da die weiter oben liegenden Kammern etwas niedrigere Drücke aufweisen.

Die Erfindung wird beispielhaft anhand der Zeichnungen näher erläutert. Es zeigen schematisch und nicht maßstäblich:
- Figur 1: einen Wärmespeicher als drucklosen, offenen Behälter nach der Erfindung,
- Figur 2: einen Wärmespeicher nach der Erfindung mit Überladesicherung,
- Figur 3: einen Wärmespeicher nach der Erfindung mit Überdruckabsicherung,
- Figur 4: einen Wärmespeicher nach der Erfindung mit Kammerentlüftung,
- Figur 5: einen Wärmespeicher nach der Erfindung mit Polsterdampf und
- Figur 6: einen Wärmespeicher nach der Erfindung mit Zusatzkammer und Kaltwasserzirkulation zur Erhöhung des statischen Drucks in den darunter liegenden Kammern.

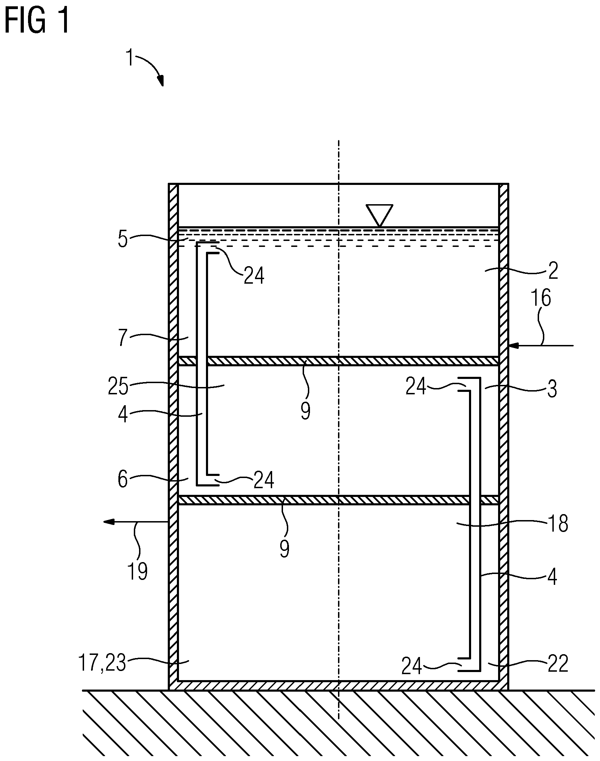

Die Figur 1 zeigt schematisch und beispielhaft einen Wärmespeicher 1 nach der Erfindung. Ein solcher Wärmespeicher 1 weist mindestens eine erste 2 und eine zweite Kammer 3 auf, wobei die Kammern 2, 3 meist größtenteils abgeschlossene Hohlräume sind aber, falls es sich um eine oberste Kammer handelt, auch noch oben offen sein können, da der Wärmespeicher ein Warmwasserspeicher ist und Wasser auch in nach oben offenen Behältern gut speicherbar ist. Die erste Kammer 2 ist über der zweiten Kammer 3 angeordnet und eine im Wesentlichen in den Kammern 2, 3 angeordnete Leitung 4 verbindet einen oberen Bereich 5 der ersten Kammer 2 mit einem unteren Bereich 6 der zweiten Kammer 3. Ein Wärmespeicher 1 nach der Erfindung umfasst mehr als nur zwei Kammern 2, 3. Das Ausführungsbeispiel der Figur 1 weist z. B. noch eine dritte 23, unterste Kammer 17 auf. Die Höhe eines solchen Wärmespeichers 1 liegt in der Größenordnung von mehreren zehn Metern, beispielsweise 40m.
Die Leitungen 4 sind im Wesentlichen vertikal im Wärmespeicher 1 angeordnet und weisen für einen gleichmäßigen Fluss des Fluids, typischerweise konditioniertes Deionat, im Wärmespeicher 1 horizontale Enden 24 auf. Andere Leitungsabschlüsse sind aber auch denkbar. Die Figur 1 zeigt zwar nur eine Leitung 4 zwischen zwei Kammern 2, 3 und 3, 23. Dies soll jedoch nicht einschränkend sein. Es ist ebenfalls möglich, mehr als nur eine Leitung 4 für die Verbindung zweier Kammern 2, 3 und 3, 23 vorzusehen.

Die Temperaturverteilung im Wärmespeicher 1 der Figur 1 könnte in beladenem Zustand folgendermaßen aussehen:
Die dritte 23 und zugleich unterste Kammer 17 weist in einem oberen Bereich 18 eine Temperatur von etwa 120°C auf. Die Temperatur im unteren Bereich 22 der untersten Kammer 17 beträgt noch etwa 100°C, wie auch der obere Bereich 25 der zweiten Kammer 3. Die Temperatur des unteren Bereichs 6 der zweiten Kammer 3 wie auch des oberen Bereichs 5 der ersten Kammer 2 liegt bei etwa 80°C.

Damit die Wärmeübertragung vom heißen auf das kalte Medium möglichst gering ist, sind die Leitungen 4 thermisch isoliert.

Aus demselben Grund sind je zwei benachbarte Kammern 2, 3 und 3, 23 durch einen isolierten Zwischenboden 9 voneinander getrennt.

Im Ausführungsbeispiel weist die erste Kammer 2 einen im unteren Bereich 7 angeordneten Anschluss 16 zum Fernwärmerücklauf und die dritte 23, unterste Kammer 17 einen im oberen Bereich 18 angeordneten Anschluss 19 zum Fernwärmevorlauf auf. Über diese Anschlüsse kann auch der Wärmespeicher 1 be- und entladen werden.

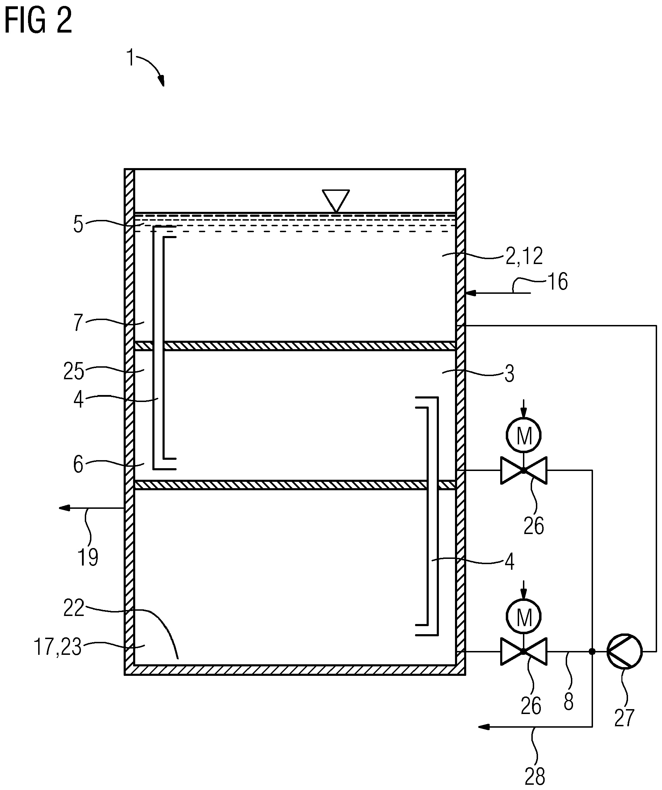

Figur 2 zeigt einen Wärmespeicher 1 nach der Erfindung mit Überladesicherung. Diese sieht vor, dass ein unterer Bereich 7 der obersten 12, ersten Kammer 2 über eine mit Ventilen 26 absperrbare Leitung 8, in die eine Pumpe 27 geschaltet ist, mit den unteren Bereichen 6, 22 der darunterliegenden zweiten und dritten Kammern 3, 23 verbunden ist. Wenn die dritte 23 also unterste Kammer 17 komplett gefüllt ist, würde das z.B. 135°C warme Wasser bei weiterer Beladung über die Ausgleichsleitung 4 in den oberen Bereich 25 der zweiten Kammer 3 strömen und aufgrund des geringeren statischen Druckes dort

Dampfblasen bilden, was aber verhindert werden soll. Daher wird bei Erreichen der zulässigen maximalen Temperatur im unteren Bereich 6, 22 der zweiten 3 und dritten Kammern 23 aus dem unteren Bereich 7 der obersten 12, ersten Kammer 2 relativ kaltes Rücklaufwasser gepumpt und zugemischt, und damit die jeweilige maximal zulässige Kammertemperatur geregelt. Sobald auch die oberste Kammer 12 (im unteren Bereich 7, wo der Rücklauf einbindet) die maximal zulässige Temperatur erreicht hat, ist eine weitere Beladung nicht mehr möglich. Neben der Überladesicherung kann mittels der Pumpe 27 auch die Fernwärme-Druckhaltung 28 erfolgen.

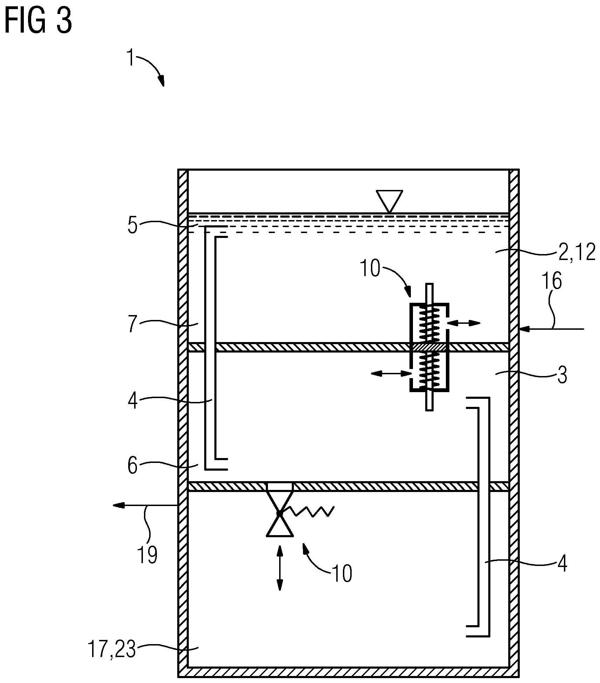

Figur 3 zeigt einen Wärmespeicher 1 nach der Erfindung mit Überdruckabsicherung wobei zwischen je zwei benachbarten Kammern 2, 3 und 3, 23 mindestens ein Druckausgleichsventil 10 angeordnet ist, das bei entsprechender Druckdifferenz öffnet. Damit kann beim Befüllen des Wärmespeichers 1 von unten über die unterste Kammer 17 die Luft in die jeweils darüber liegende Kammer 3, bzw. 2 entweichen. Beim Befüllen des Wärmespeichers 1 von oben über die oberste Kammer 12 wird das Wasser durch diese Druckausgleichsventile 10 in die jeweils untere Kammer 3, 23 strömen.

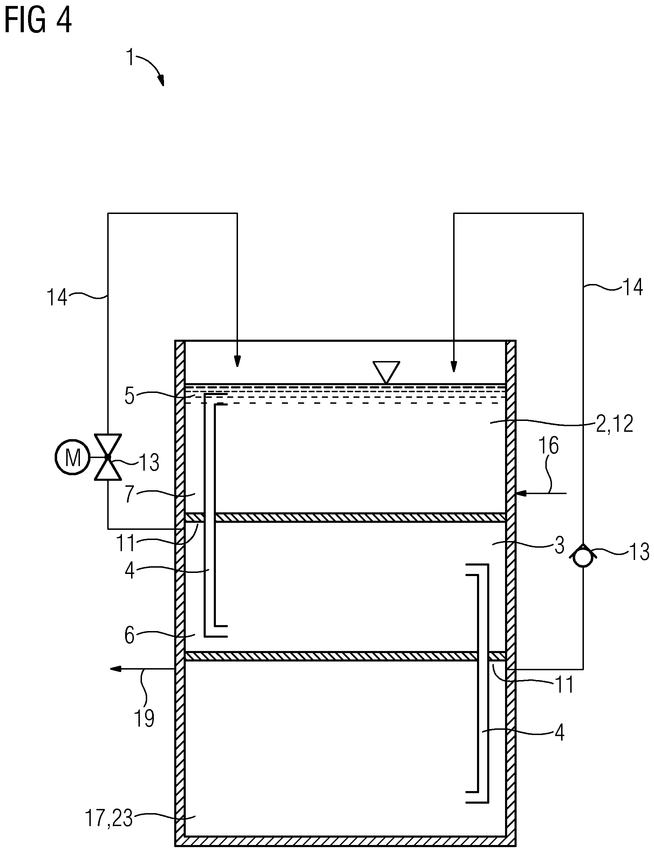

Figur 4 zeigt einen Wärmespeicher 1 nach der Erfindung mit Kammerentlüftung. An den Hochpunkten 11 der zweiten 3 und dritten Kammern 23 sind Entlüftungsventile 13 vorgesehen, welche über Leitungen 14 mit der obersten 12, ersten Kammer 2 verbunden sind. Diese Entlüftungsventile 13 können z.B. als Schwimmerventil arbeiten. Es kommen auch andere Ventile, z.B. Motorventile in Frage, welche über Füllstandsmessungen in den entsprechenden Kammern angesteuert werden. Diese Entlüftungsventile 13 entfernen eventuell anfallende Luft (z.B. auch bei der Erstbefüllung) und auch anfallenden Dampf (z.B. bei Beladung einer Kammer mit zu hoher Temperatur).

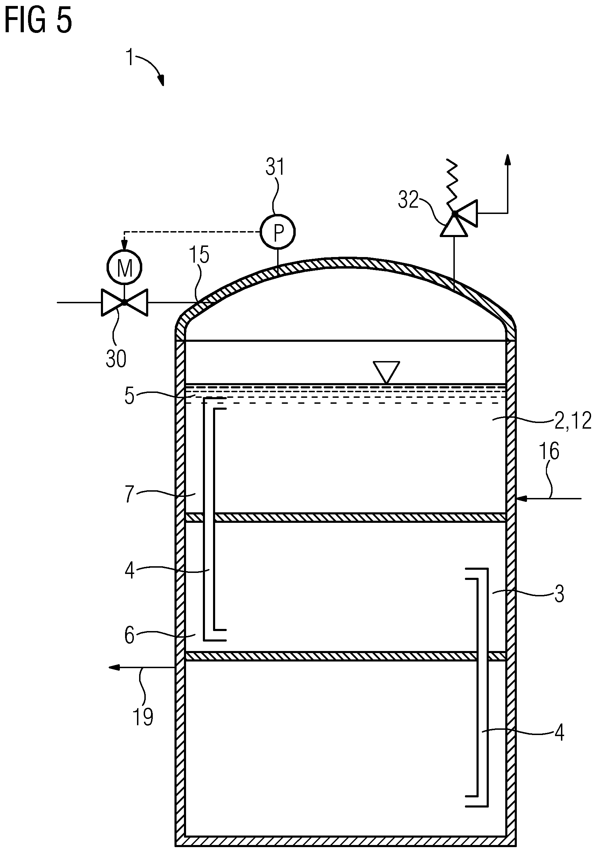

Figur 5 zeigt einen Wärmespeicher 1 nach der Erfindung wobei die oberste Kammer 12 als oben geschlossener Tank ausgeführt ist und eine Dampf- oder Inertgas-Zufuhr 15 vorgesehen ist, so dass diese Kammer 12 mit Inertgas (z.B. Stickstoff N₂) oder Polsterdampf bei einem Betriebsdruck <0,5bar beaufschlagt werden kann, um eine unerwünschte Anreicherung des Wasserinhalts mit Luftsauerstoff (O₂) oder Kohlendioxid (CO₂) zu verhindern. Die Zufuhr von Inertgas oder Dampf wird im Beispiel der Figur 5 durch ein motorgesteuertes Ventil 30 geregelt, das mit einem Druckmesser 31 gekoppelt ist. Weiterhin kann ein Überdruckventil 32 vorgesehen sein, um den maximalen Betriebsdruck auf unter 0,5 barg zu begrenzen.

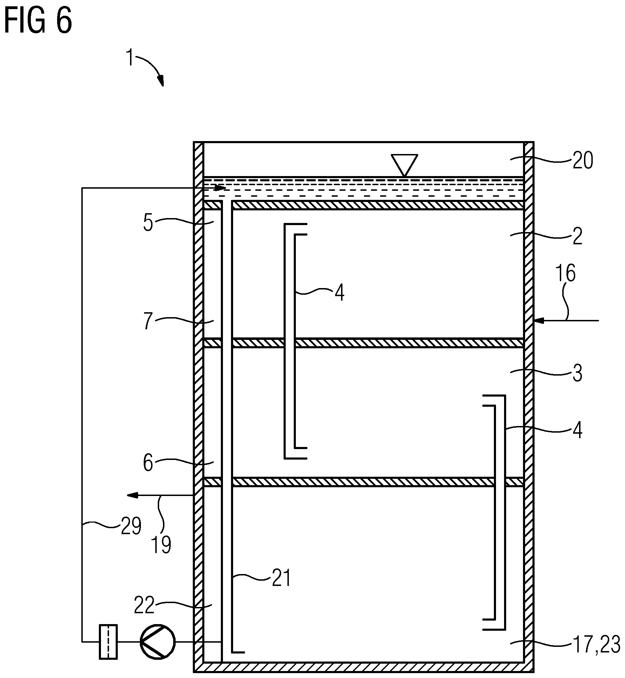

Figur 6 schließlich zeigt einen Wärmespeicher 1 nach der Erfindung mit Zusatzkammer 20 und Kaltwasserzirkulation 29 zur Erhöhung des statischen Drucks in den unten liegenden Kammern 2, 3, 23. Im Beispiel der Figur 6 ist über der ersten Kammer 2 mit dem Anschluss 16 zum Fernwärmerücklauf eine Zusatzkammer 20 angeordnet, in der eine vergleichsweise geringe Kaltwasservorlage gehalten wird. Die Zusatzkammer 20 ist über eine in den Kammern 2, 3, 23 angeordnete Leitung 21, in der sich eine Kaltwassersäule ausbildet, mit der untersten Kammer 17 verbunden. Die Leitung 21 mündet in einen unteren Bereich 22 der untersten Kammer 17.

Damit dauerhaft sichergestellt ist, dass sich in der Leitung 21 eine Kaltwassersäule ausbildet, ist eine Kaltwasserzirkulation 29 vorgesehen.

Somit kann der Druck in der ersten Kammer 2 mit dem Anschluss 16 zum Fernwärmerücklauf, unter Ausnutzung der verschiedenen spezifischen Gewichte der Kaltwassersäule in der Leitung 21 und des Warmwassers in den einzelnen Kammern 2, 3, 23, weiter angehoben werden. Die erste Kammer 2 kann dann mit Fernwärme-Wasser über 100°C beladen werden, was die Gesamtladekapazität des Wärmespeichers 1 weiter erhöht.

## Patentansprüche

1. Atmosphärisch offener Wärmespeicher (1) zum Speichern und Bereitstellen von bei der Stromerzeugung anfallender Wärmeenergie mittels eines Fluids, mit mindestens einer ersten (2) und einer zweiten Kammer (3), wobei die erste (2) über der zweiten Kammer (3) angeordnet ist und eine im Wesentlichen in den Kammern (2, 3) angeordnete Leitung (4) einen oberen Bereich (5) der ersten Kammer (2) mit einem unteren Bereich (7) der zweiten Kammer (3) verbindet, so dass es zwischen Endpunkten der Leitung (4) im Betrieb keine Temperaturdifferenzen und damit auch keine Auftriebskräfte gibt, **dadurch gekennzeichnet, dass** eine dritte (23), unterste Kammer (17) vorgesehen ist, wobei zwischen der zweiten Kammer (3) und der untersten Kammer (17) eine Leitung (4) angeordnet ist, welche einen oberen Bereich (5) der zweiten Kammer (3) mit einem unteren Bereich (7) der untersten Kammer (17) verbindet, wobei die Leitungen (4) thermisch isoliert sind und wobei je zwei benachbarte Kammern (2,3), (3,17) durch einen isolierten Zwischenboden (9) voneinander getrennt sind.

2. Wärmespeicher (1) nach Anspruch 1, wobei ein unterer Bereich (7) der ersten Kammer (2) über eine absperrbare Leitung (8), in der eine Pumpe (27) angeordnet ist, mit einem unteren Bereich (6) mindestens einer darunterliegenden Kammer (3) verbunden ist.

3. Wärmespeicher (1) nach einem der Ansprüche 1 oder 2, wobei zwischen je zwei benachbarten Kammern (2, 3) mindestens ein Druckausgleichsventil (10) angeordnet ist.

4. Wärmespeicher (1) nach einem der vorhergehenden Ansprüche, wobei an einem Hochpunkt (11) einer Kammer (3), die unter einer obersten Kammer (12) angeordnet ist, ein Entlüftungsventil (13) vorgesehen ist, welches über eine Leitung (14) mit der obersten Kammer (12) verbunden ist.

5. Wärmespeicher (1) nach einem der vorhergehenden Ansprüche, wobei die oberste Kammer (12) als oben geschlossener Tank ausgeführt ist und eine Dampf- oder Inertgas-Zufuhr (15) vorgesehen ist.

6. Wärmespeicher (1) nach einem der vorhergehenden Ansprüche, wobei die erste Kammer (2) einen in einem unteren Bereich (7) angeordneten Anschluss (16) an einen Fernwärmerücklauf und eine unterste Kammer (17) einen in einem oberen Bereich (18) angeordneten Anschluss (19) an einen Fernwärmevorlauf aufweisen.

7. Wärmespeicher (1) nach einem der vorhergehenden Ansprüche, wobei über der ersten Kammer (2) eine Zusatzkammer (20) angeordnet ist, welche über eine Leitung (21) mit der untersten Kammer (17) verbunden ist, wobei die Leitung (21) in einen unteren Bereich (22) der untersten Kammer (17) mündet.

8. Wärmespeicher (1) nach einem der vorhergehenden Ansprüche, wobei das Fluid für die Verwendung in einem Fernheiznetz geeignet ist.

9. Wärmespeicher (1) nach Anspruch 8, wobei das Fluid konditioniertes Deionat ist.

10. Anlage zur Kraft-Wärme-Kopplung, umfassend einen Stromerzeuger und einen Wärmespeicher (1) nach einem der vorhergehenden Ansprüche.

11. Anlage nach Anspruch 10, wobei eine Verbindungsleitung zwischen Wärmespeicher (1) und Fernwärmenetz vorgesehen ist.

12. Verfahren zum Speichern und Bereitstellen von bei der Stromerzeugung anfallender Wärmeenergie mittels eines Fluids, wobei ein Betriebsdruck in einem heißesten Teil eines atmosphärisch offenen Wärmespeichers (1) nach einem der Ansprüche 1 bis 9 oberhalb eines Sättigungsdrucks des Fluids entsprechend einer maximal möglichen FernwärmeVorlauftemperatur zu liegen kommt, **dadurch gekennzeichnet, dass** das Fluid in übereinanderliegenden, miteinander verbundenen Kammern (2, 3, 12, 17) gespeichert wird, und der heißeste Teil in der untersten Kammer (17) gespeichert wird, wobei der Druck für den heißesten Teil in der untersten Kammer (17) durch darüber liegendes kälteres Fluid erzeugt wird.

## Claims

1. Heat storage device (1) open to the atmosphere for storing and providing by means of a fluid thermal energy arising during power generation, with at least one first (2) and one second chamber (3), wherein the first chamber (2) is arranged above the second chamber (3) and a line (4) arranged substantially in the chambers (2, 3) connects an upper region (5) of the first chamber (2) with a lower region (7) of the second chamber (3), such that there are no temperature differences between end points of the line (4) during operation and thus also no buoyancy forces, **characterized in that** a third (23), bottom chamber (17) is provided, wherein a line (4) is arranged between the second chamber (3) and the bottom chamber (17), which line (4) connects an upper region (5) of the second chamber (3) with a lower region (7) of the bottom chamber (17), wherein the lines (4) are thermally insulated and wherein any two adjacent chambers (2, 3), (3, 17) are separated from one another by an insulated intermediate bottom (9).

2. Heat storage device (1) according to Claim 1, wherein a lower region (7) of the first chamber (2) is connected via a line (8), which may be shut off and in which a pump (27) is arranged, with a lower region (6) of at least one chamber (3) therebelow.

3. Heat storage device (1) according to one of Claims 1 or 2, wherein at least one pressure equalizing valve (10) between any two adjacent chambers (2, 3).

4. Heat storage device (1) according to one of the preceding claims, wherein a vent valve (13) connected to the top chamber (12) via a line (14) is provided at the highest point (11) of a chamber (3) arranged below a top chamber (12).

5. Heat storage device (1) according to one of the preceding claims, wherein the top chamber (12) takes the form of a tank closed at the top and a steam or inert gas feed (15) is provided.

6. Heat storage device (1) according to one of the preceding claims, wherein the first chamber (2) has a connection (16) arranged in a lower region (7) to a district heating return and a bottom chamber (17) has a connection (19) arranged in an upper region (18) to a district heating flow.

7. Heat storage device (1) according to one of the preceding claims, wherein an additional chamber (20) is arranged above the first chamber (2), which additional chamber (20) is connected to the bottom chamber (17) via a line (21), wherein the line (21) leads into a lower region (22) of the bottom chamber (17).

8. Heat storage device (1) according to one of the preceding claims, wherein the fluid is suitable for use in a district heating network.

9. Heat storage device (1) according to Claim 8, wherein the fluid is conditioned deionized water.

10. Plant for combined heat and power generation, comprising a power generator and a heat storage device (1) according to one of the preceding claims.

11. Plant according to Claim 10, wherein a connection line is provided between heat storage device (1) and district heating network.

12. Method for storing and providing by means of a fluid thermal energy arising during power generation, an operating pressure in a hottest part of a heat storage device (1) open to the atmosphere according to one of Claims 1 to 9 coming to lie above a saturation pressure of the fluid in accordance with a maximum possible district heating flow temperature, **characterized in that** the fluid is stored in superposed, interconnected chambers (2, 3, 12, 17), and the hottest part is stored in the bottom chamber (17), wherein the pressure for the hottest part is generated in the bottom chamber (17) by colder fluid lying thereover.

## Revendications

1. Accumulateur (1) de chaleur ouvert à l'atmosphère, pour accumuler et mettre à disposition de l'énergie calorifique, se produisant lors de la production du courant électrique, au moyen d'un fluide, comprenant au moins une première chambre (2) et une deuxième chambre (3), la première chambre (2) étant disposée au dessus de la deuxième chambre (3) et un conduit (4), disposé sensiblement dans les chambres (2, 3), reliant une partie (5) supérieure de la première chambre (2) à une partie (7) inférieure de la deuxième chambre (3), de manière à ne pas avoir, entre des points d'extrémité du conduit (4) en fonctionnement, de différence de température et ainsi également de force ascensionnelle, **caractérisé en ce qu'**il est prévu une troisième (23) chambre (17) la plus basse, dans lequel il est disposé, entre la deuxième chambre (3) et la chambre (17) la plus basse, un conduit (4), qui relie une partie (5) supérieure de la deuxième chambre (3) à une partie (7) inférieure de la chambre (17) la plus basse, les conduits (4) étant isolés thermiquement et, respectivement, deux chambres (2, 3), (3, 17) voisines étant séparées l'une de l'autre par un fond (9) intermédiaire isolé.

2. Accumulateur (1) de chaleur suivant la revendication 1, dans lequel une partie (7) inférieure de la première chambre (2) est reliée, par l'intermédiaire d'un conduit (8), qui peut être obturé et dans lequel est montée une pompe (27), à une partie (6) inférieure d'au moins une chambre sous-jacente.

3. Accumulateur (1) de chaleur suivant l'une des revendications 1 ou 2, dans lequel au moins une soupape (10) d'équilibrage de la pression est montée entre respectivement deux chambres (2, 3) voisines.

4. Accumulateur (1) de chaleur suivant l'une des revendications précédentes, dans lequel il est prévu, en un point (11) haut d'une chambre (3), disposé sous une chambre (12) la plus haute, un clapet (13) de purge, qui est relié à la chambre (12) la plus haute par l'intermédiaire d'un conduit (14).

5. Accumulateur (1) de chaleur suivant l'une des revendications précédentes, dans lequel la chambre (12) la plus haute est réalisée sous la forme d'une cuve fermée en haut et il est prévu une arrivée (15) de vapeur ou de gaz inerte.

6. Accumulateur (1) de chaleur suivant l'une des revendications précédentes, dans lequel la première chambre (2) a un raccord (16), disposé dans une partie (7) inférieure, sur un retour de chaleur à grande distance et une chambre (17) la plus basse a un raccord (19), disposé dans une partie (18) supérieure, sur un aller de chaleur à grande distance.

7. Accumulateur (1) de chaleur suivant l'une des revendications précédentes, dans lequel il est disposé, au dessus de la première chambre (2), une chambre (20) supplémentaire, qui est reliée à la chambre (17) la plus basse par l'intermédiaire d'un conduit (21), le conduit (21) débouchant dans une partie (22) inférieure de la chambre (17) la plus basse.

8. Accumulateur (1) de chaleur suivant l'une des revendications précédentes, dans lequel le fluide est propre à être utilisé dans un réseau de chaleur à grande distance.

9. Accumulateur (1) de chaleur suivant la revendication 8, dans lequel le fluide est de l'eau déminéralisée conditionnée.

10. Installation de production combinée de chaleur et d'électricité, comprenant un producteur de courant électrique et un accumulateur (1) de chaleur suivant l'une des revendications précédentes.

11. Installation suivant la revendication 10, dans lequel il est prévu un conduit de liaison entre l'accumulateur (1) de chaleur et le réseau de chaleur à grande distance.

12. Procédé d'accumulation et de mise à disposition d'énergie calorifique se produisant lors de la production du courant électrique, au moyen d'un fluide, dans lequel une pression de fonctionnement, dans une partie la plus chaude d'un accumulateur (1) de chaleur ouvert à l'atmosphère suivant l'une des revendications 1 à 9, s'applique au dessus d'une pression de saturation du fluide correspondant à une température d'allée de chaleur à grande distance possible au maximum, **caractérisé en ce que** l'on accumule le fluide dans des chambres (2, 3, 12, 17) superposées et reliées entre elles et on accumule la partie la plus chaude dans la chambre (17) la plus basse, dans lequel on produit la pression pour la partie la plus chaude dans la chambre (17) la plus basse, par du fluide plus froid se trouvant au-dessus.
